# EUROPEAN PATENT APPLICATION

(11) **EP 4 744 764 A1**
(43) Date of publication of application: **20.05.2026**
(21) Application number: 24927594.2
(22) Date of filing: 11.12.2024
(51) Int. Cl.: B01F 27/1145, B01F 101/14, A47J 31/44, A47J 31/00

(54) **STIRRING MECHANISM AND COLD DRINK MACHINE**

(30) Priority: 29.08.2024 CN 202411202973; 29.08.2024 CN 202422120927 U; 05.09.2024 CN 202411243857; 05.09.2024 CN 202422182973 U
(71) Applicant: Guangzhou Xin'an Trading Co., Ltd., Guangzhou Guangdong 510220 (CN)
(72) Inventor: ZHOU, Quan, Guangzhou, Guangdong 510220 (CN)
(74) Representative: J A Kemp LLP
(86) International application number: PCT/CN2024/138456
(87) International publication number: WO 2026/045001

(57) **Abstract**

Provided are a stirring mechanism and a cold drink machine. The stirring mechanism includes an ice storage container and a spiral stirring paddle. The ice storage container is provided with an ice outlet. The spiral stirring paddle is rotatably mounted in the ice storage container. A pair of stirring edges is connected to a stirring central shaft and spirally and alternately surrounds the stirring central shaft in the length direction of the stirring central shaft. A tail end of a stirring edge is close to the ice outlet. The outer contour of the stirring edge is close to the inner wall of the ice storage container and is configured to convey a material to the ice outlet during rotation. The preceding stirring mechanism is used in the cold drink machine. The provided spiral stirring paddle is provided with a pair of stirring edges spirally surrounding the stirring central shaft, fully stirring the material in the ice storage container during rotation and solving the problem of an existing ice machine that the material is easily agglomerated in a local region due to insufficient stirring and a small stirring range.

## Description

### TECHNICAL FIELD

The present invention relates to the field of stirring mechanisms and, in particular, to a stirring mechanism and a cold drink machine.

### BACKGROUND

An existing cold drink machine may store an ice-like material through a storage container. The storage container is refrigerated or heat-preserved through a refrigeration device. When the material needs to be output from the storage container, the material is pushed out through an internal discharging mechanism. The existing cold drink machine generally uses a spiral stirring paddle to drive the material to be output outside the storage container. However, the stirring range and shape of a stirring blade of the spiral stirring paddle are limited, resulting in problems such as insufficient stirring and a small stirring range. When the material is not stirred sufficiently, the material is easily agglomerated in a local region, affecting the taste of eating. Furthermore, the existing spiral stirring paddle cannot completely output all the material to the storage container at one time so that part of the material may remain at a discharge outlet. The remaining material is not easily cleaned at a storage temperature and thereby may be accumulated into a whole after accumulation for a long time, failing to be reused, blocking the output of the subsequent material, and thus affecting the discharge efficiency of the storage container.

### SUMMARY

An object of the present invention is to provide a stirring mechanism. A spiral stirring paddle of the stirring mechanism is provided with a pair of stirring edges spirally surrounding a stirring central shaft, fully stirring a material in an ice storage container during rotation.

The present invention further provides a cold drink machine using the preceding stirring mechanism. To achieve this object, the present invention adopts the technical solutions below.

A stirring mechanism is provided. The stirring mechanism includes an ice storage container and a spiral stirring paddle.

The ice storage container is provided with an ice outlet. The spiral stirring paddle is rotatably mounted in the ice storage container.

The spiral stirring paddle includes a stirring central shaft and a stirring edge.

A pair of stirring edges is connected to the stirring central shaft and spirally and alternately surrounds the stirring central shaft in a length direction of the stirring central shaft. A tail end of the stirring edge is close to the ice outlet. An outer contour of the stirring edge is close to an inner wall of the ice storage container and is configured to convey a material to the ice outlet during rotation.

Preferably, the stirring central shaft includes a backflow side plate.

The backflow side plate is disposed on the tail end of the stirring edge. An L-shaped backflow groove is formed between the tail end of the stirring edge and the backflow side plate. The L-shaped backflow groove rotates along with the stirring edge. The stirring edge receives the material in vicinity of the ice outlet in a region of the backflow side plate and discharges the material from a region without the backflow side plate to make the material away from the ice outlet.

Preferably, the stirring mechanism further includes a refrigeration mechanism.

The ice storage container includes an ice storage shell and an ice outlet cover.

The ice outlet cover is mounted on the ice storage shell. An ice storage cavity is disposed in the ice storage shell. A refrigeration end of the refrigeration mechanism is attached to an outer side wall of the ice storage cavity. An ice outlet cavity is disposed in the ice outlet cover. The ice storage cavity horizontally communicates with the ice outlet cavity. The ice outlet is disposed in the ice outlet cavity. The spiral stirring paddle is located between the ice storage cavity and the ice outlet cavity.

The stirring edge of the L-shaped backflow groove extends from the vicinity of the ice outlet to the ice storage cavity.

Preferably, the ice outlet is disposed below the ice outlet cavity and is located on a horizontal end of the ice storage container. A plurality of grid plates spaced apart from each other are disposed in the ice outlet. The L-shaped backflow groove rotates through the plurality of grid plates.

Preferably, a refrigeration pipe is disposed on the refrigeration end of the refrigeration mechanism. The refrigeration pipe surrounds and gets in contact with the outer side wall of the ice storage cavity.

Preferably, the stirring mechanism further includes a rotation motor.

An output end of the rotation motor is connected to the spiral stirring paddle. The rotation motor drives the spiral stirring paddle to rotate clockwise or counterclockwise so as to drive the material in the ice storage container to be pushed towards the ice outlet in one rotation direction and drive the material away from the ice outlet through the L-shaped backflow groove in an other rotation direction.

Preferably, the spiral stirring paddle further includes a connection rib.

One end of the connection rib is connected to the stirring central shaft. An other end of the connection rib is connected to an inner ring of the stirring edge. A plurality of connection ribs are distributed in the length direction of the stirring central shaft.

Preferably, the spiral stirring paddle further includes a stirring round seat and a reinforcing rib.

A horizontal end of the stirring edge is connected to the stirring round seat. An other horizontal end of the stirring edge is provided with the L-shaped backflow groove. An end of the reinforcing rib is connected to the stirring central shaft. An other end of the reinforcing rib is connected to the stirring round seat. A plurality of reinforcing ribs are distributed around the stirring round seat.

A cold drink machine is provided. The cold drink machine includes the preceding stirring mechanism.

Compared with the existing art, one technical solution among the preceding technical solutions has the beneficial effects below.

This solution provides a stirring mechanism. The spiral stirring paddle of the stirring mechanism is provided with a pair of stirring edges spirally surrounding the stirring central shaft, fully stirring the material in the ice storage container during rotation and solving the problem of an existing ice machine that the material is easily agglomerated in a local region due to insufficient stirring and a small stirring range.

### BRIEF DESCRIPTION OF DRAWINGS

FIG. 1 is a structural view of a spiral stirring paddle in one embodiment.
FIG. 2 is a structural view of an ice outlet in one embodiment.
FIG. 3 is an exploded view illustrating the structure of a stirring mechanism in one embodiment.
FIG. 4 is a sectional view illustrating the structure of the stirring mechanism in one embodiment.
FIG. 5 is an enlarged view of part A of FIG. 4.

### Reference list

- 1: ice storage container
- 2: refrigeration mechanism
- 4: spiral stirring paddle
- 5: rotation motor
- 11: ice storage shell
- 12: ice outlet cover
- 111: ice storage cavity
- 121: ice outlet cavity
- 122: ice outlet
- 123: grid plate
- 21: refrigeration pipe
- 41: stirring central shaft
- 42: stirring edge
- 43: backflow side plate
- 44: connection rib
- 45: stirring round seat
- 46: reinforcing rib
- 421: L-shaped backflow groove

### DETAILED DESCRIPTION

Embodiments of the present invention are described below in detail. Examples of the embodiments are illustrated in the drawings, where the same or similar reference numerals throughout the drawings represent the same or similar elements or elements having the same or similar functions. The embodiments described below with reference to the drawings are illustrative and intended only to explain the present invention and cannot be construed as limiting the present invention.

In the description of the present invention, it is to be understood that the orientation or position relationships indicated by terms "center", "longitudinal", "lateral", "length", "width", "thickness", "above", "below", "left", "right", "front", "back", "vertical", "horizontal", "top", "bottom", "in", "out", "inside", "outside", "inner end", "outer end", "axial", "radial", "circumferential", etc. are based on the orientation or position relationships shown in the drawings, merely for facilitating description of the present invention and simplifying description, and do not indicate or imply that the apparatus or element referred to has a specific orientation and is constructed and operated in a specific orientation, and thus it is not to be construed as limiting the present invention. In addition, a feature defined as a "first" feature or a "second" feature may explicitly or implicitly include one or more of such features to distinguish and describe the features regardless of order or weight. In the description of the present invention, unless otherwise noted, the phrase of "a plurality of" means more than two.

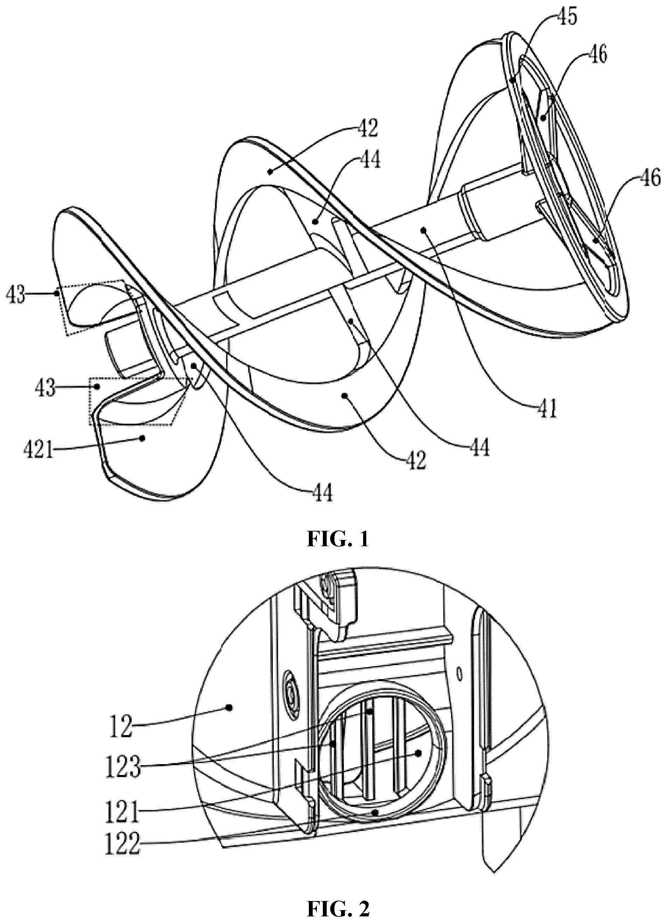

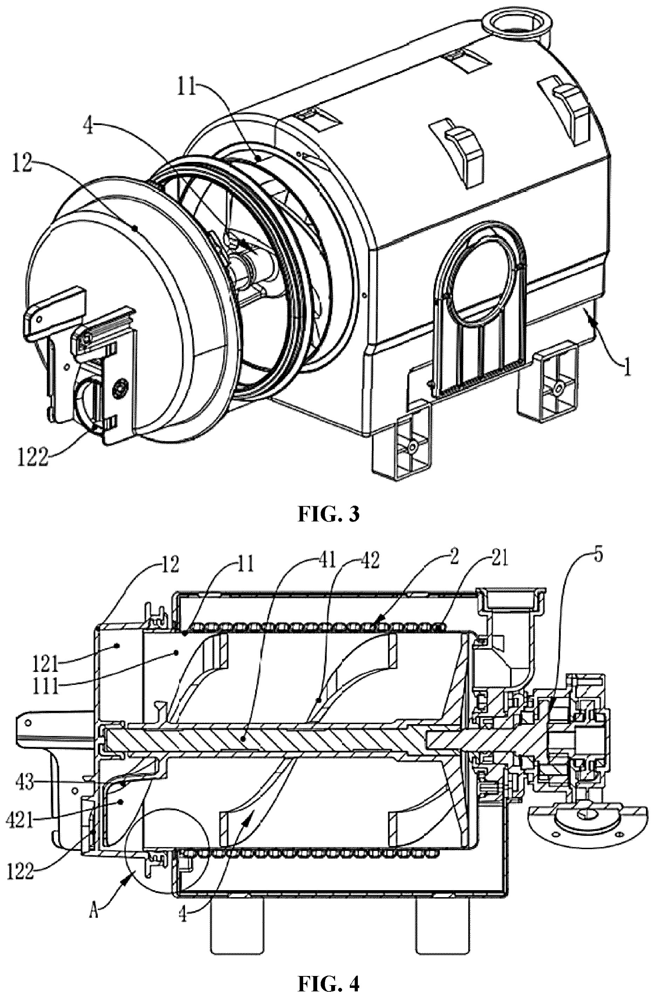

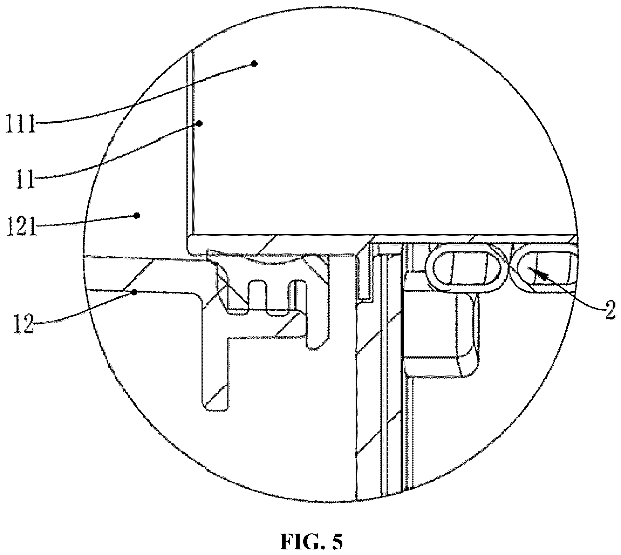

As shown in FIGS. 1 to 5, a stirring mechanism is provided. The stirring mechanism includes an ice storage container 1 and a spiral stirring paddle 4.

The ice storage container 1 is provided with an ice outlet 122. The spiral stirring paddle 4 is rotatably mounted in the ice storage container 1.

The spiral stirring paddle 4 includes a stirring central shaft 41 and a stirring edge 42.

A pair of stirring edges 42 is connected to the stirring central shaft 41 and spirally and alternately surrounds the stirring central shaft 41 in the length direction of the stirring central shaft 41. A tail end of a stirring edge 42 is close to the ice outlet 122. The outer contour of the stirring edge 42 is close to the inner wall of the ice storage container 1 and is configured to convey a material to the ice outlet 122 during rotation.

This solution provides a stirring mechanism. The spiral stirring paddle 4 of the stirring mechanism is provided with a pair of stirring edges 42. The stirring edges 42 spirally surround the stirring central shaft 41 so as to fully stir the material of the ice storage container 1 during rotation, solving the problem of an existing ice machine that the material is easily agglomerated in a local region due to insufficient stirring and a small stirring range.

Specifically, the ice storage container 1 is a region used for storing the material in the ice machine. The ice storage container 1 can be equipped with a heat preservation function as required. Besides, a refrigeration mechanism 2 may be added as required. Therefore, the material is mainly stored in a cold environment and in a solidified state. A pair of stirring edges 42 is disposed on the stirring central shaft 41 of the spiral stirring paddle 4 in this solution, extends from one end of the stirring central shaft 41 to the other end of the stirring central shaft 41, and is spirally and alternately distributed. That is, one section of one stirring edge 42 is wrapped above the stirring central shaft 41, and one section of the other stirring edge 42 is correspondingly wrapped below the stirring central shaft 41. In this case, the pair of stirring edges 42 can alternately and avoidantly surround the stirring central shaft 41 to form an alternately distributed spiral structure. In this case, when the stirring central shaft 41 rotates half a turn, one stirring edge 42 pushes the material forward by one unit. When the stirring central shaft 41 continues to rotate half a turn, that is, the other stirring edge 42 pushes the material forward by one unit. Accordingly, the pair of stirring edges 42 can push the material forward seamlessly, shortening the residence time before and after the movement of the material. The material does not stay at a certain position so that the material in the ice storage container 1 is not easily agglomerated and the material can be fully stirred. Moreover, the outer contour of a stirring edge 42 is close to the inner wall of the ice storage container 1 so that the outermost side of the stirring edge 42 can be close to the inner wall of the ice storage container 1. A large stirring range of the stirring edges 42 enables the material to be sufficiently stirred. Moreover, the stirring edges 42 are distributed spirally. When the stirring edges 42 rotate, the stirring edges 42 push the material to move to the ice outlet 122, thus outputting the material to the outside of the ice outlet 122 and further dispersing the material during the push. With this arrangement, this solution solves the problem of an existing ice machine that the material is easily agglomerated in a local region due to insufficient stirring and a small stirring range.

Preferably, the spiral stirring paddle includes the backflow side plate 43.

The backflow side plate 43 is disposed on the tail end of a stirring edge 42. An L-shaped backflow groove 421 is formed between the tail end of the stirring edge 42 and the backflow side plate 43. The L-shaped backflow groove 421 rotates along with the stirring edge 42. The stirring edge 42 receives the material in the vicinity of the ice outlet 122 in a region of the backflow side plate 43 and discharges the material from a region without the backflow side plate 43 to make the material away from the ice outlet 122.

The spiral stirring paddle 4 in this solution can not only stir and convey the material but also discharge the material at the ice outlet 122 from the ice outlet 122 to prevent the material from blocking the ice outlet 122. Specifically, the stirring edge 42 spirally surrounds the stirring central shaft 41. The stirring edge 42 may be connected to the stirring central shaft 41 in the middle, at an end, or at other positions. The stirring edge 42 spirally surrounds the stirring central shaft 41 so that two ends of the stirring edge 42 extend in a curved surface. The backflow side plate 43 is mounted on the tail end of the stirring edge 42. The L-shaped backflow groove 421 is formed between the backflow side plate 43 and the stirring edge 42. When the stirring edge 42 rotates, the L-shaped backflow groove 421 is driven to rotate cyclically. When the L-shaped backflow groove 421 rotates, the L-shaped backflow groove 421 may scrape the inner wall of an ice outlet cavity 121 in the vicinity of the ice outlet 122 between the stirring edge 42 and the backflow side plate 43, thus receiving the scraped material between the stirring edge 42 and the backflow side plate 43. The material rotates with the L-shaped backflow groove 421. Since the tail end of the stirring edge 42 is curved, the backflow side plate 43 blocks the material when the backflow side plate 43 is at a low position. The material does not easily fall off in the region of the backflow side plate 43. When the backflow side plate 43 rotates to a high position, the lower part of the stirring edge 42 is hollow. The backflow side plate 43 no longer supports the material. The material is discharged from the region without the backflow side plate 43, thereby implementing the discharge of the material at the ice outlet 122. The material does not easily remain at the ice outlet 122. Thus the material is not accumulated at the ice outlet 122, reducing the effect of the accumulated material on the subsequent discharge and preventing the material remaining at the ice outlet 122 from freezing. In this solution, only a single driving source drives the stirring central shaft 41 to rotate so that the functions of stirring the material, conveying the material and preventing the material from being stacked at the ice outlet 122 can be implemented simultaneously.

Preferably, the stirring mechanism further includes a refrigeration mechanism 2.

The ice storage container 1 includes an ice storage shell 11 and an ice outlet cover 12.

The ice outlet cover 12 is mounted on the ice storage shell 11. An ice storage cavity 11 is disposed in the ice storage shell 11. A refrigeration end of the refrigeration mechanism 2 is attached to the outer side wall of the ice storage cavity 111. The ice outlet cavity 121 is disposed in the ice outlet cover 12. The ice storage cavity 111 horizontally communicates with the ice outlet cavity 121. The ice outlet 122 is disposed in the ice outlet cavity 121. The spiral stirring paddle 4 is located between the ice storage cavity 111 and the ice outlet cavity 121.

The stirring edge 42 of the L-shaped backflow groove 421 extends from the vicinity of the ice outlet 122 to the ice storage cavity 111.

In the optimal embodiment, the stirring edge 42 extends from the vicinity of the ice outlet 122 to the ice storage cavity 111. That is, the region without the backflow side plate 43 enables the material to be output to the ice storage cavity 111 when the ice storage cavity 111 rotates. In this case, the material in the region of the backflow side plate 43 is not discharged. That is, the material in the ice outlet cavity 121 is not discharged. The backflow side plate 43 extends to the ice storage cavity 111 (for example, the opening of the ice storage cavity 111). After the backflow side plate 43 rotates to the ice storage cavity 111, the backflow side plate 43 does not support the material so that the material is discharged at the opening of the ice storage cavity 111, thus implementing the rapid backflow of the material from the ice outlet 122 to the ice storage cavity 111. The material is not easily accumulated at the ice outlet cavity 121. The refrigeration end of the refrigeration mechanism 2 is attached to the outer side wall of the ice storage cavity 111. No refrigeration mechanism 2 is provided outside the ice outlet cavity 121. The outside of the ice outlet cavity 121 is in contact with air or other structures. The air may surround the outer side wall of the ice outlet cavity 121, thus heating the inside of the ice outlet cavity 121 through the outer side wall of the ice outlet cavity 121. Therefore, the temperature of the ice outlet cavity 121 rises. The temperature of the ice storage cavity 111 is lower than the temperature of the ice outlet cavity 121. The material has higher fluidity in the ice outlet cavity 121, making the material easier to be discharged outside the air outlet 122 and reducing the amount of material remaining at the ice outlet 122.

Preferably, the ice outlet 122 is disposed below the ice outlet cavity 121 and is located on a horizontal end of the ice storage container 1. A plurality of grid plates 123 spaced apart from each other are disposed in the ice outlet 122. The L-shaped backflow groove 421 rotates through the grid plates 123.

As shown in FIG. 2, the grid plates 123 are disposed in the ice outlet 122, which is equivalent to that several sub-openings are formed by the grid plates 123. Each sub-opening can convey materials independently, preventing the material from being accumulated at a single sub-opening. Moreover, the L-shaped backflow groove 421 rotates through the grid plates 123. The material at each sub-opening can be swept and scraped and flow back to the ice storage cavity 111. In particular, the spiral stirring paddle 4 with double stirring edges 42 is adopted in this solution. The two stirring edges 42 alternately sweep and scrape the ice outlet 122 so that the sub-openings in the ice outlet 122 can be swept and scraped without gaps. The material is not easily accumulated at the ice outlet 122, resulting in high cleaning efficiency.

Preferably, a refrigeration pipe 21 is disposed on the refrigeration end of the refrigeration mechanism 2. The refrigeration pipe 21 surrounds and gets in contact with the outer side wall of the ice storage cavity 111.

A refrigeration medium can be introduced into the refrigeration pipe 21 in this solution. The heat of the ice storage cavity 111 is taken away by the refrigeration medium of the refrigeration pipe 21 so that the ice storage cavity 111 is kept at a low temperature state.

Preferably, the stirring mechanism further includes a rotation motor 5.

An output end of the rotation motor 5 is connected to the spiral stirring paddle 4. The rotation motor 5 drives the spiral stirring paddle 4 to rotate clockwise or counterclockwise so as to drive the material in the ice storage container 1 to be pushed towards the ice outlet 122 in one rotation direction and drive the material away from the ice outlet 122 through the L-shaped backflow groove 421 in the other rotation direction.

The rotation motor 5 in this solution is replaced by a known motor. The rotation direction of the rotation motor 5 can be adjusted to clockwise rotation or counterclockwise rotation. As shown, when the spiral stirring paddle 4 rotates counterclockwise, the stirring edge 42 pushes the material in the ice storage container 1 towards the ice outlet 122. In this case, the material can be pushed through the spiral stirring edge 42 to be discharged as long as the spiral stirring paddle 4 rotates counterclockwise. After the material is completely discharged from the ice storage container 1, the rotation direction of the rotation motor 5 can be switched. The spiral stirring paddle 4 is switched to rotate clockwise, thus cleaning and scraping the inner wall of the ice storage container 1 in the vicinity of the ice outlet 122 through the L-shaped backflow groove 421. The material remaining in the vicinity of the ice outlet 122 flows back to a position away from the ice outlet 122.

Preferably, the spiral stirring paddle 4 further includes the connection rib 44.

One end of the connection rib 44 is connected to the stirring central shaft 41. The other end of the connection rib 44 is connected to the inner ring of the stirring edge 42. A plurality of connection ribs 44 are distributed in the length direction of the stirring central shaft 41.

A plurality of connection ribs 44 are provided so that different horizontal positions of the stirring edge 42 are connected to the stirring central shaft 41 separately, improving the connection tightness between the stirring central shaft 41 and the stirring edge 42, making the stirring edge 42 not easily deformed or shaken during rotation, and improving the mechanical strength of the stirring edge 42. Moreover, the stirring edge 42 is spirally distributed. The stirring edge 42 includes an inner ring and an outer ring. The inner ring is mainly connected to the connection ribs 44. A main stirring range is outside the inner ring. Therefore, the connection ribs 44 in the inner ring can also be used for stirring the material located in the inner ring of the stirring edge 42, thereby making up for a stirring blind region of the stirring edge 42.

Preferably, the spiral stirring paddle 4 further includes a stirring round seat 45 and reinforcing ribs 46.

A horizontal end of the stirring edge 42 is connected to the stirring round seat 45. The other horizontal end of the stirring edge 42 is provided with the L-shaped backflow groove 421. An end of a reinforcing rib 46 is connected to the stirring central shaft 41. The other end of the reinforcing rib 46 is connected to the stirring round seat 45. A plurality of reinforcing ribs 46 are distributed around the stirring round seat 45.

In this solution, the reinforcing rib 46 is disposed on one end of the stirring edge 42 and connects the stirring round seat 45 to the stirring central shaft 41. An end of the stirring central shaft 41 is connected to the stirring round seat 45 through the reinforcing rib 46. Moreover, a plurality of reinforcing ribs 46 are provided and are distributed around, improving the connection tightness between the stirring round seat 45 and the stirring central shaft 41. Moreover, the reinforcing rib 46 can stir the material at the end of the stirring edge 42, making up for a stirring blind region of the stirring edge 42. The stirring edge 42 is connected to the stirring round seat 45 at the end. The connection stability between the stirring edge 42 and the stirring central shaft 41 is further improved through the connection of the connection ribs 44 and the stirring edge 42.

A cold drink machine is provided. The cold drink machine is provided with the stirring mechanism in any preceding embodiment.

Although embodiments of the present invention have been shown and described, it is to be understood by those of ordinary skill in the art that multiple variations, modifications, substitutions and alterations can be made in these embodiments without departing from the principle and spirit of the present invention. The scope of the present invention is defined by the claims and equivalents thereof.

## Claims

1. A stirring mechanism, comprising an ice storage container and a spiral stirring paddle, wherein
the ice storage container is provided with an ice outlet, and the spiral stirring paddle is rotatably mounted in the ice storage container;
the spiral stirring paddle comprises a stirring central shaft and a stirring edge; and
a pair of stirring edges is connected to the stirring central shaft and spirally and alternately surrounds the stirring central shaft in a length direction of the stirring central shaft, a tail end of the stirring edge is close to the ice outlet, and an outer contour of the stirring edge is close to an inner wall of the ice storage container and is configured to convey a material to the ice outlet during rotation.

2. The stirring mechanism according to claim 1, wherein the spiral stirring paddle comprises a backflow side plate, wherein
the backflow side plate is disposed on the tail end of the stirring edge, an L-shaped backflow groove is formed between the tail end of the stirring edge and the backflow side plate, the L-shaped backflow groove rotates along with the stirring edge, and the stirring edge receives the material in vicinity of the ice outlet in a region of the backflow side plate and discharges the material from a region without the backflow side plate to make the material away from the ice outlet.

3. The stirring mechanism according to claim 2, further comprising a refrigeration mechanism, wherein
the ice storage container comprises an ice storage shell and an ice outlet cover;
the ice outlet cover is mounted on the ice storage shell, an ice storage cavity is disposed in the ice storage shell, a refrigeration end of the refrigeration mechanism is attached to an outer side wall of the ice storage cavity, an ice outlet cavity is disposed in the ice outlet cover, the ice storage cavity horizontally communicates with the ice outlet cavity, the ice outlet is disposed in the ice outlet cavity, and the spiral stirring paddle is located between the ice storage cavity and the ice outlet cavity; and
the stirring edge of the L-shaped backflow groove extends from the vicinity of the ice outlet to the ice storage cavity.

4. The stirring mechanism according to claim 3, wherein the ice outlet is disposed below the ice outlet cavity and is located on a horizontal end of the ice storage container, a plurality of grid plates spaced apart from each other are disposed in the ice outlet, and the L-shaped backflow groove rotates through the plurality of grid plates.

5. The stirring mechanism according to claim 4, wherein a refrigeration pipe is disposed on the refrigeration end of the refrigeration mechanism, and the refrigeration pipe surrounds and gets in contact with the outer side wall of the ice storage cavity.

6. The stirring mechanism according to any one of claims 2 to 5, further comprising a rotation motor, wherein
an output end of the rotation motor is connected to the spiral stirring paddle, and the rotation motor drives the spiral stirring paddle to rotate clockwise or counterclockwise so as to drive the material in the ice storage container to be pushed towards the ice outlet in one rotation direction and drive the material away from the ice outlet through the L-shaped backflow groove in an other rotation direction.

7. The stirring mechanism according to claim 2, wherein the spiral stirring paddle further comprises a connection rib, wherein
an end of the connection rib is connected to the stirring central shaft, an other end of the connection rib is connected to an inner ring of the stirring edge, and a plurality of connection ribs are distributed in the length direction of the stirring central shaft.

8. The stirring mechanism according to claim 7, wherein the spiral stirring paddle further comprises a stirring round seat and a reinforcing rib, wherein
a horizontal end of the stirring edge is connected to the stirring round seat, an other horizontal end of the stirring edge is provided with the L-shaped backflow groove, an end of the reinforcing rib is connected to the stirring central shaft, an other end of the reinforcing rib is connected to the stirring round seat, and a plurality of reinforcing ribs are distributed around the stirring round seat.

9. A cold drink machine, comprising the stirring mechanism according to any one of claims 1 to 8.
